Europäisches Patentamt

European Patent Office

Office européen des brevets

(19)

(11) Veröffentlichungsnummer: **0 013 371**
**B1**

(12) **EUROPÄISCHE PATENTSCHRIFT**

(45) Veröffentlichungstag der Patentschrift:
**16.06.82**

(51) Int. Cl.³: **C 08 F 2/30**

(21) Anmeldenummer: **79105129.5**

(22) Anmeldetag: **13.12.79**

(54) Verfahren zur Herstellung von Polymerisaten durch Emulsionspolymerisation in Gegenwart von einem Alkylenoxid-Addukt elner alicyclischen Monohydroxyl-Verbindung.

(30) Priorität: **28.12.78 DE 2856459**

(43) Veröffentlichungstag der Anmeldung:
**23.07.80 Patentblatt 80/15**

(45) Bekanntmachung des Hinweises auf die Patenterteilung:
**16.06.82 Patentblatt 82/24**

(84) Benannte Vertragsstaaten:
**BE DE FR GB NL**

(56) Entgegenhaltungen:
**DE-A-2 513 162**
**US-A-3 219 609**

(73) Patentinhaber: **BASF Aktiengesellschaft,
Carl-Bosch-Strasse 38, D-6700 Ludwigshafen (DE)**

(72) Erfinder: **Krause, Hans-Joachim, Dr. Dipl.-Chem.,
Pariser Strasse 31, D-6700 Ludwigshafen (DE)**
Erfinder: **Neubert, Gerhard, Dr. Dipl.-Chem.,
Panoramastrasse 11, D-6719 Battenberg (DE)**
Erfinder: **Trapp, Horst, Dr. Dipl.-Chem.,
Johann-Sebastian-Bach-Strasse 10A, D-6831 Plankstadt
(DE)**
Erfinder: **Leib, Gernot, Asselheimer Strasse 12,
D-6710 Frankenthal 3 (DE)**

Verfahren zur Herstellung von Polymerisaten durch Emulsionspolymerisation in Gegenwart von einem Alkylenoxid-Addukt einer alicyclischen Monohydroxyl-Verbindung

Die vorliegende Erfindung betrifft ein Verfahren zur Herstellung von Polymerisaten durch Emulsionspolymerisation äthylenisch ungesättigter Monomerer in wässriger Dispersion und Isolierung der Polymerisate.

Die Herstellung von Polymerdispersionen durch Polymerisation von polymerisierbaren äthylenisch ungesättigten monomeren Verbindungen in wässriger Dispersion in Gegenwart anionaktiver oder kationaktiver Dispergiermittel bzw. Emulgatoren und radikalliefernder Polymerisationsinitiatoren ist seit langem bekannt. Dies gilt auch für die Verwendung nichtionogener Emulgatoren als Dispergiermittel.

Als nichtionogene Emulgatoren kommen, wie z. B. in der deutschen Patentanmeldung P 2 831 942.8 vorgeschlagen, meist Alkylenoxidaddukte von Alkylphenolen, insbesondere äthoxylierte Octyl- und Nonylphenole zur Anwendung. Wird aus derartigen Polymerdispersionen das Polymerisat auf übliche Weise, z. B. durch Fällung, isoliert, so verbleiben noch geringe Mengen der Alkylphenoladdukte im Polymerisat. Diese Alkylphenoladdukte dürfen jedoch aus lebensmittelrechtlichen Gründen als Emulgatoren für Polymere, die auf Gebieten verwendet werden, auf denen Lebensmittelkontakt nicht auszuschliessen ist, nicht verwendet werden.

Aufgabe der vorliegenden Erfindung ist es, ein Verfahren zur Herstellung von Polymerisaten aufzuzeigen, bei dem sich über die Emulsionspolymerisation verfahrenstechnisch vorteilhaft Polymerisate herstellen lassen, die den lebensmittelrechtlichen Erfordernissen entsprechen. Überraschenderweise lässt sich dies durch die Verwendung von Alkylenoxidaddukten alicyclischer Hydroxylverbindungen als nichtionogene Emulgatoren bei der Emulsionspolymerisation erreichen.

Gegenstand der vorliegenden Erfindung ist daher ein Verfahren zur Herstellung von Polymerisaten durch Emulsionspolymerisation äthylenisch ungesättigter monomerer Verbindungen in wässriger Disperion in Gegenwart wasserlöslicher Dispergiermittel und Polymerisationsinitiatoren und Isolierung der Polymerisate aus der Polymerisatdispersion, das dadurch gekennzeichnet ist, dass als wasserlösliches Dispergiermittel ein Alkylenoxidaddukt einer alicyclischen Monohydroxyl-Verbindung in einer Menge von 0,5 bis 5 Gewichtsprozent, bezogen auf Monomere, bei einem Monomeren/Wasser-Verhältnis zwischen 1 : 3 und 1 : 1 verwendet wird.

Die nach dem erfindungsgemässen Verfahren hergestellten Polymerisate sind hinsichtlich des Dispergiermittelrestes toxikologisch weitgehend unbedenklich. Ein weiterer wesentlicher Vorteil des erfindungsgemässen Verfahrens liegt in der damit erreichten vorteilhaften Verfahrenstechnik bei der Emulsionspolymerisation, sowie in der guten Haftfestigkeit auf metallischen Oberflächen, insbesondere Aluminium bei der Applikation.

Die mit den erfindungsgemäss zu verwendenden Dispergiermitteln, insbesondere die mit oxäthyliertem Cyclohexanol hergestellten Polymerdispersionen und die daraus isolierten Polymer-Festprodukte können bei sonst gleichen Eigenschaften wie mit üblichen Emulgatoren hergestellte Polymerisate die vom Gesetzgeber errichtete Schranke passieren und auch auf Gebieten verwendet werden, auf denen Kontakt mit Lebensmitteln möglich ist.

Die bislang verwendeten nichtionischen Emulgatoren zeichnen sich durch ein phenolisches Zentrum mit lipophiler aliphatischer Seitenkette aus, die für die Mizellbildung verantwortlich gemacht wird. Es war daher ein Vorurteil zu überwinden, von der bisherigen Lehre abweichend einen cycloaliphatischen Grundkörper ohne Seitenkette nach Oxäthylierung als Primärdispergiermittel einzusetzen.

Zu den für das erfindungsgemässe Verfahren zu verwendenden Einsatzstoffen ist im einzelnen folgendes auszuführen.

Als äthylenisch ungesättigte monomere Verbindungen kommen die üblichen polymerisierbaren Monomeren, wie Vinylaromaten, z. B. Styrol, α-Methylstyrol, Monoolefine, Acryl- bzw. Metacrylsäurederivate, wie Acrylsäureester von Alkoholen mit 1 bis 18, vorzugsweise 1 bis 8 Kohlenstoffatomen, Methacrylsäureester von Alkoholen mit 1 bis 18, vorzugsweise 1 bis 8 Kohlenstoffatomen, Nitrile, wie Acrylnitril und Methacrylnitril, Malein- bzw. Fumarsäureester von Alkoholen mit 1 bis 8 Kohlenstoffatomen, z. B. Diisobutylmaleinat, Di-n-butylmaleinat, Vinylester von Carbonsäuren mit 2 bis 10, vorzugsweise 2 bis 8 Kohlenstoffatomen im Carbonsäurerest, wie Vinylacetat, Vinylpropionat, Vinyl-2-äthylhexanat, Vinyl- bzw. Vinyliden-Halogenide, wie Vinylchlorid und Vinylidenchlorid, sowie Gemische der oben genannten Monomeren in Betracht.

Besonders vorteilhaft lässt sich das erfindungsgemässe Verfahren für die Herstellung von Vinylchloridcopolymerisaten anwenden.

In untergeordneten Mengen können auch weitere einpolymerisierbare äthylenisch ungesättigte Monomere, wie Acryl- und Methacrylsäure, Maleinsäure, Fumarsäure, Crotonsäure sowie Halbester einpolymerisierbarer äthylenisch ungesättigter Dicarbonsäuren wie z. B. Monobutylmaleinat mitverwendet werden.

Das Monomeren/Wasser-Verhältnis liegt im allgemeinen zwischen 1 : 3 und 1 : 1.

Als Dispergiermittel werden erfindungsgemäss Alkylenoxidaddukte alicyclischer Monohydroxylverbindungen verwendet. Als solche eignen sich die Propylenoxid- und vorzugsweise die Äthylenoxidaddukte (= Oxäthylate) alicyclischer Hydroxylverbindungen, wobei im allgemeinen 5 bis 100, vorzugsweise 20 bis 80 Mol Äthylenoxid pro Mol alicyclische Hydroxylverbindung angelagert sind.

Als alicyclische Hydroxylverbindungen kommen in Frage Hydroxylderivate des Cyclopentans, Cyclohexans, Cycloheptans und Decalins, die gegebenenfalls noch andere Substituenten, wie Alkylgruppen tragen können. Besonders bevorzugt ist Cyclohexanol, an das pro Mol 20 bis 80 Mole Äthylenoxid angelagert sind.

Die erfindungsgemässen Dispergiermittel werden im allgemeinen in Mengen von 0,5 bis 5, vorzugsweise 1 bis 3 Gewichtsprozent, bezogen auf das Monomere oder das Monomerengemisch eingesetzt.

Als Polymerisationsinitiatoren kommen die üblicherweise für die Emulsionspolymerisation verwendeten wasserlöslichen Radikalbildner, wie Peroxyverbindungen, z.B. Kalium- oder vorzugsweise Ammoniumpersulfat, sowie Wasserstoffperoxid in Betracht. Diese Initiatoren werden im allgemeinen in Mengen von 0,05 bis 2, vorzugsweise 0,1 bis 0,5 Gewichtsprozent, bezogen auf polymerisierbare Monomere eingesetzt.

Dem Polymerisationsansatz können ausserdem Puffersubstanzen, wie Natriumhydrogencarbonat, Natriumpyrophosphat oder Natriumacetat in Mengen bis zu 2 Gewichtsprozent, Beschleuniger, wie Formaldehydsulfoxilat in Mengen bis zu 1 Gewichtsprozent, Regler, wie Butenol in Mengen bis zu 3 Gewichtsprozent, jeweils bezogen auf eingesetzte Monomere zugesetzt werden.

Für die Durchführung des erfindungsgemässen Verfahrens kommen verschiedene bei der Emulsionspolymerisation üblicherweise angewandte Fahrweisen in Betracht, beispielsweise Gesamtvorlage, Monomerenzulauf oder Emulsionszulauf, besonders bevorzugt ist Monomerenzulauf. Im allgemeinen wird dazu die Temperatur des Polymerisationsmediums in einem Bereich von 40 bis 100 °C, vorzugsweise 50 bis 70 °C gehalten. Der Druck richtet sich nach den eingesetzten Monomeren und liegt im allgemeinen zwischen 3 und 10 bar.

Als pH-Wert wird zweckmässigerweise ein Bereich zwischen 6 und 9 eingehalten.

Das erfindungsgemässe Verfahren wird zweckmässigerweise in kühl- und heizbaren, mit Rührer und Temperaturmessung versehenen Behältern, beispielsweise in Rührdruckkesseln durchgeführt.

Nach Beendigung der Polymerisation, was durch Probenahme und Bestimmung des Feststoffgehaltes bzw. anhand des Verlaufes der Druckkurve festgestellt werden kann, wird die Polymerisatdispersion zweckmässigerweise abgekühlt und über Siebeinrichtungen aus dem Kessel gelassen. Soll das Festprodukt isoliert werden, dann wird die Polymerisatdispersion zweckmässigerweise ausgefällt.

Es hat sich gezeigt, dass die Ausfällung der Polymerisatdispersionen mit 3 bis 5 Kohlenstoffatome enthaltenden Alkoholen, wie n-Propanol, i-Propanol, n-Butanol, i-Butanol, n- und Isoamylalkohol besonders vorteilhaft ist. Bevorzugt als Fällungsmittel sind n-Butanol und Isobutanol.

Das Fällungsmittel wird den Polymerisatdispersionen im allgemeinen in Mengen von 20 bis 200 Gewichtsprozent, bezogen auf Festsubstanz zugefügt.

Aus der erhaltenen Suspension wird das Polymerisat auf übliche Weise abgetrennt, z.B. durch Abfiltrieren, Waschen mit entsalztem Wasser und Trocknen bei 40 bis 90 °C, z.B. mittels Heissluft.

Das Fällungsmittel kann auch destillativ aus der Suspension abgetrennt bzw. wiedergewonnen werden.

Die erfindungsgemäss hergestellten Polymerisatdispersionen zeigen besonders gute Lagerstabilität.

Die erfindungsgemäss hergestellten Polymerisate können in üblichen Lösungsmitteln, wie Estern, Ketonen, Aromaten oder deren Gemischen gelöst werden und eignen sich besonders vorteilhaft für Beschichtungen auf Metallen, mineralischen und faderhaltigen Untergründen oder auf Kunstharzen oder Kunststoffen.

Die erfindungsgemäss hergestellten Polymerisate können gegebenenfalls auch mit anderen Beschichtungsrohstoffen, wie z.B. anderen Bindemitteln, Füllstoffen und Pigmenten kombiniert verwendet werden.

Die im Beispiel angegebenen Teile und Prozente beziehen sich, soweit nicht anders angegeben, auf das Gewicht.

Beispiel

In einem Rührdruckkessel werden zu 300 Teilen vollentsalztem Wasser 0,9 Teile Cyclohexyloxäthylat (= Additionsprodukt von ca. 50 Mol Äthylenoxid pro Mol Cyclohexanol), 0,35 Teile Natriumhydrogencarbonat, 0,7 Teile Ammoniumpersulfat, 17 Teile Maleinsäurediisobutylester und 51 Teile Vinylchlorid gegeben.

Dieser Vorlage werden bei 60 °C über 12 Stunden 202 Teile Vinylchlorid, 65 Teile Maleinsäurediisobutylester, 7 Teile Acrylsäure, 181 Teile vollentsalztes Wasser und 9 Teile des Cyclohexyloxäthylats in alkalischem Medium zugeführt. Nach weiteren 9 Stunden beträgt der Enddruck ca. 1 bar, die Polymerdispersion wird abgekühlt und mit n-Butanol ausgefällt. Aus der entstandenen Suspension wird ein Butanol/Wasser-Gemisch abdestilliert, das Polymerisat abfiltriert, gewaschen und auf übliche Weise getrocknet. Das dabei erhaltene feinkörnige Produkt kann z.B. in einem Xylol/Methylisobutylketon-Gemisch gelöst auf Aluminiumblech aufgebracht werden. Nach der Trocknung erhält man einen einheitlichen Überzug mit guter Haftfestigkeit und Elastizität.

**Patentansprüche**

1. Verfahren zur Herstellung von Polymerisaten durch Emulsionspolymerisation äthylenisch ungesättigter monomerer Verbindungen in wässriger Dispersion in Gegenwart wasserlöslicher Dispergiermittel und Polymerisationsinitiatoren und gegebenenfalls Isolierung der Polymerisate aus der Polymerisatdispersion, dadurch gekennzeichnet, dass als wasserlösliches Dispergiermittel ein Alkylenoxidaddukt einer alicyclischen Monohydroxyl-Verbindung in einer Menge von 0,5 bis 5 Gewichtsprozent, bezogen auf Monomere, bei einem Monomeren/Wasser-Verhältnis zwischen 1 : 3 und 1 : 1 verwendet wird.

2. Verfahren nach Anspruch 1, dadurch gekennzeichnet, dass als Dispergiermittel alicyclische Oxäthylate verwendet werden.

3. Verfahren nach Anspruch 1 oder 2, dadurch gekennzeichnet, dass als alicyclisches Oxäthylat Cyclohexyloxäthylat verwendet wird.

4. Verfahren nach einem der vorhergehenden Ansprüche, dadurch gekennzeichnet, dass als Dispergiermittel eine Cyclohexyloxäthylat mit 20 bis 80 Mol Äthylenoxid verwendet wird.

5. Verfahren nach einem der vorhergehenden Ansprüche, dadurch gekennzeichnet, dass das Polymerisat mit Alkoholen mit 3 bis 5 Kohlenstoffatomen ausgefällt und auf übliche Weise zum Festprodukt weiterverarbeitet wird.

6. Verfahren nach einem der vorhergehenden Ansprüche, dadurch gekennzeichnet, dass das Polymerisat ein Vinylchloridcopolymerisat ist.

## Claims

1. A process for the production of polymers by emulsion polymerization of ethylenically unsaturated monomeric compounds in aqueous dispersion in the presence of water-soluble dispersants and polymerization initiators, with or without isolation of the polymers from the polymer dispersion, characterized in that an alkylene oxide adduct of an alicyclic monohydroxy compound is used as water-soluble dispersant in an amount of 0.5 to 5% by weight, based on monomers, the monomer/water ratio being from 1 : 3 to 1 : 1.

2. A process as claimed in claim 1, characterized in that an alicyclic oxyethylate is used as dispersant.

3. A process as claimed in claim 1 or 2, characterized in that the alicyclic oxyethylate used is a cyclohexyl oxyethylate.

4. A process as claimed in any of the preceding claims, characterized in that a cyclohexyl oxyethylate containing 20 to 80 moles of ethylene oxide is used as dispersant.

5. A process as claimed in any of the preceding claims characterized in that the polymer is precipitated with an alcohol of 3 to 5 carbon atoms and further processed into a solid product in the usual manner.

6. A process as claimed in any of the preceding claims, characterized in that the polymer is a vinyl chloride copolymer.

## Revendications

1. Procédé de préparation de polyméres par une polymérisation en émulsion de composés monomères à insaturation éthylénique en dispersion aqueuse en présence d'agents de dispersion hydrosolubles et d'initiateurs de la polymérisation avec isolement éventuel des polymères formés de la dispersion de polymère, caractérisé en ce que l'on emploie comme agent de dispersion hydrosoluble un produit d'addition d'oxyde d'alcoylène sur un composé alicyclique monohydroxylé en une proportion de 0,5 à 5% en poids par rapprt aux monomères, les proportions des monomères et de l'eau étant dans un rapport compris entre 1 : 3 et 1 : 1.

2. Procédé suivant la revendication 1, caractérisé en ce que l'on emploie comme agent de dispersion un éthoxylate alicyclique.

3. Procédé suivant l'une des revendications 1 et 2, caractérisé en ce que l'éthoxylate alicyclique est un éthoxylate de cyclohexyle.

4. Procédé suivant l'une des revendications précédentes, caractérisé en ce que l'on emploie comme agent de dispersion un éthoxylate de cyclohexyle avec 20 à 80 moles d'oxyde d'éthylène.

5. Procédé suivant l'une des revendications précédentes, caractérisé en ce que le polymère formé est précipité par un alcool en C$_3$ à C$_5$, puis transformé de façon usuelle en produit solide.

6. Procédé suivant l'une des revendications précédentes, caractérisé en ce que le polymère est un copolymère du chlorure de vinyle.